# EUROPEAN PATENT SPECIFICATION

(11) **EP 0 386 890 B1**
(45) Date of publication and mention of the grant of the patent: **21.04.1993**
(21) Application number: 90301494.2
(22) Date of filing: 13.02.1990
(51) Int. Cl.: B60N 2/00, A47C 7/18, B29C 67/22

(54) **Different density foam vehicle seat and method of making the same**
Fahrzeugsitz mit unterschiedlicher Schaumdichte und Verfahren zu dessen Herstellung
Siège de véhicule en mousse à densités différentes et sa méthode de fabrication

(30) Priority: 14.02.1989 US 310352
(43) Date of publication of application: 12.09.1990
(73) Proprietor: HOOVER UNIVERSAL, INC., Ann Arbor Michigan 48104 (US)
(72) Inventor: Deview, Gregory Ernest, Ypsilanti, Michigan 48197 (US)
(74) Representative: Senior, Alan Murray

(56) References cited:
- DE-A- 1 908 604
- DE-A- 3 513 651
- DE-B- 2 118 503
- GB-A- 1 284 353
- GB-A- 2 197 659
- GB-A- 2 198 080
- US-A- 4 860 415

## Description

This invention relates generally to vehicle seat assemblies and more particularly to the formation of a vehicle seat and back having a foam cushion moulded in place onto a seat cover.

One method for forming a vehicle seat cushion having a moulded in place foam cushion bonded to a cover member having a predetermined shape is disclosed in EP-A-0 347 115 published 20 December 1989. This method is basically the formation of a foam cushion body within a cover member by placing the cover member into a mould cavity having a predetermined shape and then pouring an expandable foam into the cavity, allowing the foam too expand and solidify, thus forming the foam cushion. This method of constructing a vehicle seat or back can be used where a seat cushion having a single density is utilised.

An additional set of fabrication steps is required for vehicle seat assemblies having cushions and bolsters positioned to the side of the cushion. Conventionally, separate bolster cushions are formed and covered with a fabric cover and then secured together by means of a frame or by sewing the covers together so as to form an integrated seat and/or cushion assembly.

It is an object of the present invention to simplify the formation of a vehicle seat assembly having a load bearing cushion and deflectable bolster cushions on either side of the load bearing cushion by moulding in place both the load bearing seat cushion and the bolster cushions within a single seat or back cover member.

It is another object of the present invention to provide a vehicle seat or back cushion for a vehicle seat assembly having bolster cushions of a different density than the load bearing seat or back cushion so as to provide desired improved rigidity and deflectability to the bolsters.

It is a preferred object of the present invention to provide a vehicle seat assembly having bolsters and load bearing cushions having deflectable frame members embedded therein to limit the deflection of the bolsters.

DE-A-3 513 651 discloses a method of making a seat including the steps of the prior art portion of claim 1. In this prior method, removable barriers are provided in the mould whereby the cushion and bolster foam core portions of the seat are separately moulded in the one mould in cavities separated by removable barriers which, following expansion of the foam, are removed from the mould with the moulded parts then having later to be covered and assembled to form a seat assembly. As compared therewith, the present invention, as defined in claim 1, provides a method in which a cover for the seat is provided in the mould prior to the moulding operation with the barriers being provided by strips of material secured to the cover. With this arrangement, the cushion and bolster portions of the seat are provided as a single unit held together by the cover with the cover being reliably secured in position in that exposed portions of the seat have the cover portion tightly moulded thereto held reliably in position by the barrier strips which extend into the cushion between the bolster and load supporting cushion portions. GB-A-2 198 080 discloses a method of moulding foamed plastics articles in which a cover is provided in the mould before the formation of the mould but there is no suggestion of the formation of a seat having separately formed foamed portions of different densities which have been moulded in the one cover with the different portions being separated by a barrier strip secured to the cover which necessarily retains the cover in the moulded position in relation to the bolster and cushion portions of the seat.

A preferred construction of vehicle seat assembly made by the method of this invention is defined in claim 7, the prior art portion of which also is based upon DE-A-3 513 651. As well as the features consequent upon carrying out the method of the invention, this claim is limited to the preferred structure comprising a resilient flexible frame member embedded in the foam bolster portion.

Further benefits and advantages of the present invention will become apparent to those skilled in the art to which this invention relates from the subsequent description and the preferred embodiments and the appended claims taken in conjunction with the accompanying drawings.

### Brief Description of the Drawings

Figure 1 is a perspective view of a vehicle seat formed in accordance with the present invention,
Figure 2 is a sectional view of the vehicle seat shown in Figure 1 taken along the line 2-2,

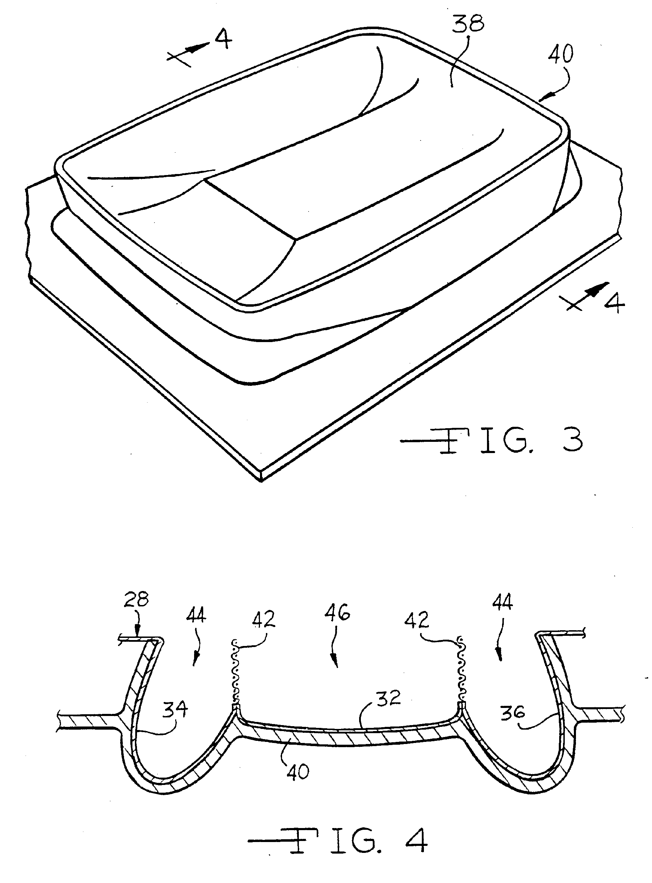

Figure 3 is a perspective view of a mould for forming a portion of the vehicle seat shown in Figure 1,
Figure 4 is a sectional view of the mould taken along the line 4-4 in Figure 3, and

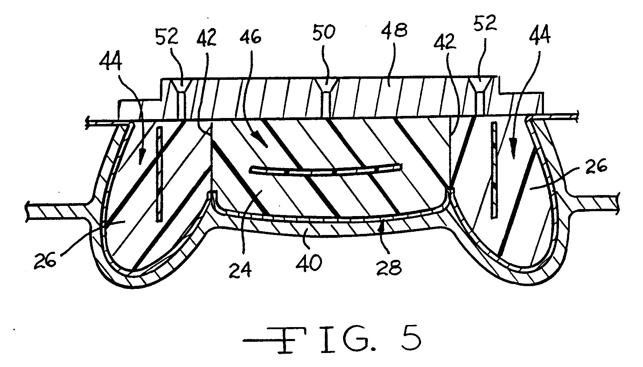

Figure 5 is a sectional view of the mould shown in Figure 4 with the mould lid in place and the vehicle seat back formed therein.

### DETAILED DESCRIPTION OF THE INVENTION

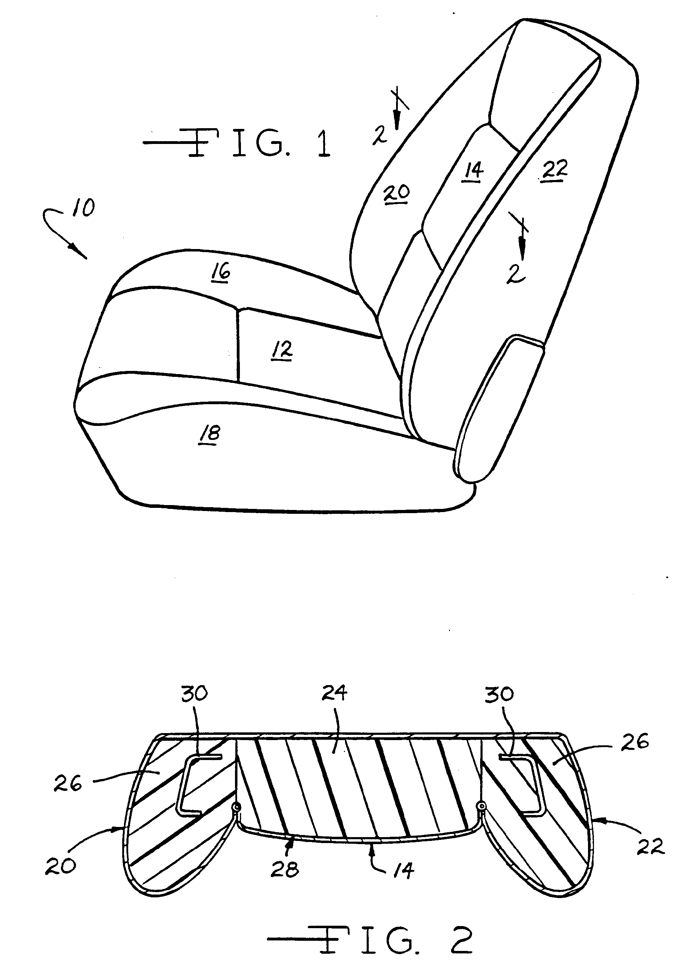

Turning now to the drawing, a vehicle seat assembly 10 according to the present invention is illustrated in Figure 1. The vehicle seat assembly 10 includes load bearing seat cushion 12 and load bearing back cushion 14. Seat cushion 12 is surrounded by side bolsters 16 and 18. Similarly, back cushion 14 is sandwiched by side bolsters 20 and 22.

Bolsters 16 and 18 and 20 and 22 are preferably formed of a foam material having a higher density than the seat and back cushions 12 and 14, respectively. The higher densities of the bolsters provides an improved degree of stability in cradling the vehicle occupant in the vehicle seat assembly 10 while still allowing limited deflection of the bolsters as the occupant moves around in the vehicle seat.

The vehicle seat and back are formed by the same pour in place method as described below. Therefore, the following description applies interchangeable to the seat structure or the back structure.

The vehicle seat or the vehicle back includes a central foam cushion 24 and side foam bolsters 26 molded in place, preferably at the same time, within a vehicle seat cover 28 as illustrated in Figure 2. Also embedded within the foam cushion 24 and bolsters 26 may be a flexible frame 30 which can be adjustable to provide a range of lumbar support as well as provide variation in the flexibility of the side bolsters depending upon the rigidity of the frame structure 30 itself.

The seat or back of the vehicle seat assembly 10 according to the present invention is formed by placing a seat cover member 28 which has a cushion portion 32 and a pair of bolster portions 34 and 36 into a mold cavity 38 in mold 40. The margin between the cushion portion and each of the bolster portions includes a barrier strip 42 sewn to the seat cover 28 such that when the cover 28 is stretched onto the mold 40, the barrier strips 42 form vertical partitions creating a pair of separate bolster cavities 44 on either side of the cushion cavity 46 as shown in Figure 4.

The barrier strips 42 may be formed of a cloth fabric material, a polyethylene sheet, or even a perforated webbing, depending upon the amount of rigidity desired between the cushion 24 and the bolsters 26. In addition, the structural frame 30 may be supported from the mold lid so as to project into the bolster and the cushion cavities 44 and 46. This allows the expanding foam to envelope the frame 30 during pouring in place which provides additional rigidity and support to the assembly.

Once the cover is placed into the mold cavity and either pressed or vacuum drawn into conformity with the predetermined interior configuration of the mold, a mold lid 48 is installed to close the mold assembly. Separate mold passages 50 and 52 lead through the mold lid to the three cavities formed within the closed mold. A first expandable foam material is injected through passage 50 into the center cavity 46 to form the load bearing cushion section, and a second expandable foam is injected through the second set of passages 52 into the bolster cavities. The injection of foam material may be simultaneous or staggered. The expandable foams may be of differing densities and hence result in different stiffness and deflection characteristics in the completed bolsters of vehicle seat cushion assembly 10.

## Claims

1. A method of forming at least a portion of a vehicle seat assembly having a foam load engaging cushion (24) and a foam bolster (26) adjacent said foam cushion (24) wherein a mould (40) is provided with an internal barrier (42) dividing the mould into separate portions (46,44) corresponding with the cushion (24) and holster (26) to be formed and expandable foam of different densities is moulded in the mould portion (46) for moulding of the cushion and the mould portion (44) for the bolster, characterised in that a seat cover member (28) is provided within said mould (40) prior to the provision of the foam materials thereinto with the internal barrier (42) being formed by a barrier strip secured to said cover member (28).

2. A method according to claim 1, wherein the cover member (28) is so stretched when provided in the mould (40) as to stretch the barrier strip (42) to divide the mould cavity into cushion and bolster moulding portions (46,44).

3. A method according to claim 1 or 2, wherein the barrier strip (42) is sewn to the cover member (28).

4. A method according to any preceding claim, wherein the barrier strip (42) prevents the foam material forming the cushion (24) bonding with the foam of the bolster (26).

5. A method according to any preceding claim, wherein a supporting frame (30) is provided in the mould (40) so that foam materials supplied to the mould expand to enclose the frame within the cushion and bolster.

6. A method according to any preceding claim, wherein the foam material used to form the bolster has a greater density than the foam used to form the cushion.

7. A method according to any preceding claim, in which two bolsters (26) are formed, one on either side of the load bearing cushion (24), two material strips (42) being provided to separate the respective bolster portions (44) of the mould (40) cavity from the cushion portion (46), whereby during expansion of the foam within the mould, the foam expanding to form a cushion is kept separate from a different density foam material expanded to form the bolsters.

8. A vehicle seat assembly comprising a cushion load bearing cushion (24) and at least one bolster (26) adjacent the load bearing cushion, the cushion comprising a foam material having a density different from that of foam material comprising the bolster, characterised in that the foam cushion and bolster portions are separated by a barrier strip (42) secured to a cover member (28) comprising part of the seat assembly and in which cover the foam cushion and bolster have been moulded during formation thereof, and in that a flexible frame member (30) is embedded in the foam bolster.

9. A vehicle seat assembly according to claim 8, wherein the flexible frame member (30) has a generally flat shape and is connected to a frame member embedded in the cushion.

## Patentansprüche

1. Verfahren zum Bilden von mindestens einem Abschnitt einer Fahrzeugsitzanordnung mit einem lastaufnehmenden Schaumkissen (24) und einem Schaumpolster (26) benachbart zu dem Schaumkissen (24), bei dem eine Gußform (40) mit einer internen Barriere (42) vorgesehen wird, die die Gußform in getrennte Abschnitte (46, 44) unterteilt, die den zu bildenden Kissen (24) und Polster (26) entsprechen, und expandierbarer Schaum verschiedener Dichten in den Gußabschnitt (46) zum Gießen des Kissens und den Gußabschnitt (44) für das Polster gegossen wird,
dadurch gekennzeichnet, daß ein Sitzabdeckteil (28) innerhalb der Gußform (40) vor dem Vorsehen des Schaummateriales dahinein vorgesehen wird, wobei die interne Barriere (42) durch ein an dem Abdeckteil (28) gesicherten Barrierenstreifen gebildet wird.

2. Verfahren nach Anspruch 1, bei dem das Abdeckteil so gedehnt wird, wenn es in der Gußform (40) vorgesehen ist, daß der Barrierenstreifen (42) zum Unterteilen des Gußhohlraumes in die Kissen- und Polstergußabschnitte (46, 44) gedehnt wird.

3. Verfahren nach Anspruch 1 oder 2, bei dem der Barrierenstreifen (42) an dem Abdeckteil (28) angenäht ist.

4. Verfahren nach einem der vorhergehenden Ansprüche, bei dem der Barrierenstreifen (42) das das Kissen (24) bildende Schaummaterial an der Verbindung mit dem Schaum des Polsters (26) hindert.

5. Verfahren nach einem der vorhergehenden Ansprüche, bei dem ein Stützrahmen (30) in der Gußform (40) so vorgesehen ist, daß zu der Gußform zugeführtes Schaummaterial zum Einschließen des Rahmens in dem Kissen und dem Polster expandiert.

6. Verfahren nach einem der vorhergehenden Ansprüche, bei dem das zum Bilden des Polsters benutzte Schaummaterial eine größere Dichte als der zum Bilden des Kissens benutzte Schaum aufweist.

7. Verfahren nach einem der vorhergehenden Ansprüche, bei dem zwei Polster (26) auf beiden Seiten des lastaufnehmenden Kissens (24) gebildet werden, zwei Materialstreifen vorgesehen werden zum Trennen der entsprechenden Polsterabschnitte (44) des Gußformhohlraumes von dem Kissenabschnitt (46), wodurch während der Expansion des Schaumes innerhalb der Gußform der Schaum, der zum Bilden eines Kissens expandiert, von dem Schaummaterial mit einer unterschiedlichen Dichte getrennt bleibt, der zum Bilden der Polster expandiert.

8. Fahrzeugsitzanordnung mit einem lastaufnehmenden Kissen (24) und mindestens einem Polster (26) benachbart zu dem lastaufnehmenden Kissen, wobei das Kissen ein Schaummaterial mit einer Dichte aufweist, die sich von dem Schaummaterial unterscheidet, daß das Polster aufweist,
dadurch gekennzeichnet, daß die Schaumkissen- und Polsterabschnitte durch einen Barrierenstreifen (42) getrennt sind, der an einem Abdeckteil (28) befestigt ist, das einen Teil der Sitzanordnung darstellt und in welcher Abdeckung das Schaumkissen und Polster während ihrer Bildung gegossen sind, und daß ein flexibles Rahmenteil (30) in dem Schaumpolster eingebettet ist.

9. Fahrzeugsitzanordnung nach Anspruch 8, bei der das flexible Rahmenteil (30) im allgemeinen flache Form aufweist und mit einem in dem Kissen eingebetteten Rahmenteil verbunden ist.

## Revendications

1. Procédé pour former au moins une partie d'un siège de véhicule comportant un coussin (24) supportant la charge et formé de mousse et un élément latéral d'appui (26) en mousse adjacent au coussin (24), procédé dans lequel on munit un moule (40) d'un élément interne formant barrière (42) divisant le moule en deux parties séparées (46, 44) correspondant au coussin (24) et à l'élément latéral d'appui (26) à former et on moule une mousse expansible de densités différentes dans la partie (46) de moule servant à mouler le coussin et dans la partie (44) de moule servant à mouler l'élément latéral d'appui, caractérisé en ce que l'on dispose une housse (28) de siège à l'intérieur du moule (40) avant d'y introduire les matières de formation de mousse, la barrière interne (42) étant formée par une bande fixée à ladite housse (28).

2. Procédé selon la revendication 1, dans lequel on étire la housse (28) lorsqu'elle est disposée dans le moule (40) afin d'étirer la bande formant barrière (42) de manière à diviser la cavité de moule en des parties (46, 44) de moulage de coussin et d'élément latéral d'appui.

3. Procédé selon la revendication 1 ou 2, dans lequel la bande formant barrière (42) est cousue à la housse (28).

4. Procédé selon l'une quelconque des revendications précédentes, dans lequel la bande formant barrière (42) empêche la mousse de formation du coussin (42) d'adhérer à la mousse de l'élément latéral d'appui (26).

5. Procédé selon l'une quelconque des revendications précédentes, dans lequel on dispose une ossature de support (30) dans le moule (40) de manière que les matières de formation de moule introduites dans le moule subissent une expansion afin d'enfermer l'ossature à l'intérieur du coussin et de l'élément latéral d'appui.

6. Procédé selon l'une quelconque des revendications précédentes, dans lequel la mousse utilisée pour former l'élément latéral d'appui a une densité plus grande que la mousse utilisée pour former le coussin.

7. Procédé selon l'une quelconque des revendications précédentes, dans lequel on forme deux éléments latéraux d'appui (26), à raison d'un sur chaque côté du coussin (24) supportant la charge, on dispose deux bandes (42) pour séparer de la partie cousin (46) les parties respectives (44) d'éléments latéraux d'appui de la cavité de moule (40), grâce à quoi, pendant l'expansion de la mousse à l'intérieur du moule la mousse subit une expansion pour former un coussin est maintenue séparée d'une matière de formation de mousse de densité différente subissant une expansion pour former les éléments d'appui latéraux.

8. Siège de véhicule comportant un coussin (24) supportant la charge et au moins un élément latéral d'appui (26) adjacent au coussin supportant la charge, le coussin comprenant une mousse ayant une densité différente de celle de la mousse constituant l'élément latéral d'appui, caractérisé en ce que les parties coussin et éléments latéraux d'appui en mousse sont séparés par une bande formant barrière (42) fixée à une housse (28) constituant une partie du siège et dans laquelle le coussin et l'élément latéral d'appui en mousse ont été moulés pendant leur formation, et en ce qu'une ossature flexible (30) est noyée dans l'élément latéral d'appui en mousse.

9. Siège de véhicule selon la revendication 8, dans lequel l'ossature flexible (30) a une forme plate d'une façon générale et adhère à une ossature noyée dans le coussin.
